# DEMANDE DE BREVET EUROPEEN

(11) **EP 1 195 283 A1**
(43) Date de publication de la demande: **10.04.2002**
(21) Numéro de dépôt: 01402572.0
(22) Date de dépôt: 05.10.2001
(51) Int. Cl.: B60K 31/00

(54) **Procédé de régulation de distance et de vitesse d'un véhicule automobile**

(30) Priorité: 06.10.2000 FR 0012775; 06.10.2000 FR 0012776
(71) Demandeur: Renault, 92100 Boulogne Billancourt (FR)
(72) Inventeur: Maurel, David, 31810 Venerque (FR); Richard, Arnaud, 92150 Suresnes (FR); Spigai, Marc, 31270 Villeneuve Tolosane (FR)

(57) **Abrégé**

Procédé de régulation de la distance d'un premier véhicule automobile, équipé d'un système de freinage (13) et d'un organe de contrôle du groupe motopropulseur (12), par rapport à un second véhicule, par un calculateur (11) équipant ledit premier véhicule, et consistant en la transmission de consignes, par ledit calculateur (11), au système de freinage (13) et à l'organe de contrôle du groupe moto-propulseur (12), lorsque ladite régulation de distance est activée par le conducteur du véhicule, caractérisé en ce que la régulation de distance ne peut être activée par le conducteur que lorsqu'au moins une condition d'activation est remplie.

## Description

La présente invention se rapporte à la régulation de vitesse et de distance des véhicules routiers. Plus précisément, elle concerne un procédé de régulation de distance d'un véhicule lors d'embouteillage sur voies rapides.

Elle concerne un procédé de régulation de la distance d'un premier véhicule automobile, équipé d'un système de freinage et d'un organe de contrôle du groupe motopropulseur, par rapport à un second véhicule, par un calculateur équipant ledit premier véhicule, et consistant en la transmission de consignes, par ledit calculateur, au système de freinage et à l'organe de contrôle du groupe motopropulseur, ledit calculateur pouvant notamment piloter l'arrêt et le démarrage du premier véhicule, lorsque ladite régulation de distance est activée par le conducteur du premier véhicule

Un régulateur de vitesse permet de rouler à une vitesse de croisière, choisie par le conducteur, sans avoir à maintenir le pied sur l'accélérateur.

Un régulateur de distance comprend généralement un régulateur de vitesse, et offre donc toujours la possibilité au conducteur de sélectionner une vitesse de croisière. Toutefois, il permet, en outre, à partir de la détection de l'environnement présent devant le véhicule, de garder, de manière automatique, une distance de sécurité avec un véhicule précédant le véhicule du conducteur.

Un premier type de régulateur de distance, communément appelé Adaptive Cruise Control (ACC), assure une régulation de distance et de vitesse dans une gamme de vitesses allant d'une vitesse minimale non nulle (typiquement 30-50 km/h jusqu'à de hautes vitesses). Son utilisation est donc sensiblement limitée aux voies rapides.

Il présente toutefois l'avantage de ne nécessiter que des moyens de détection de l'environnement relativement simples. Un exemple de ce type de régulateur de distance est décrit dans la publication EP0605104.

Un second type de régulateur de distance, communément appelé Stop&Go, assure une régulation de distance et de vitesse dans une gamme de vitesses allant d'une vitesse nulle jusqu'à une vitesse moyenne (typiquement 50-70 km/h). Il autorise en outre l'arrêt et le redémarrage automatique, ou assisté par l'action du conducteur du véhicule. Il peut être utilisé dans de nombreux contextes routiers, en particulier dans un environnement urbain et rural, requérant de ce fait des moyens de détection de l'environnement autour du véhicule particulièrement complexes et de coûts élevés. Ceci freine le développement de ce type de prestation sur une majorité de véhicules.

La publication DE 19 739 713 décrit un système d'assistance à la conduite en bouchon basé sur la détection des véhicules présents dans la voie en avant du véhicule équipé dudit système. Un moyen de détection de l'environnement du type télémètre détecte les obstacles fixes et détermine un démarrage du véhicule précédent. Une alarme acoustique est alors émise vers le conducteur. Un tel système ne permet pas de gérer l'arrêt et le démarrage du véhicule dans une situation de bouchon.

Les bouchons sont pourtant des contextes routiers pour lesquels un régulateur de distance permettant le contrôle de l'arrêt et du redémarrage du véhicule serait particulièrement appréciable et pour lesquels l'environnement du véhicule reste relativement simple et permet d'envisager des moyens de détection de l'environnement adapté proches de ceux utilisés sur les régulateurs de distance du type ACC. En effet, durant un bouchon, le conducteur est amené à réaliser, de façon répétitive, des opérations de freinage et de redémarrage du véhicule, et pour lesquels la position des véhicules à détecter se limite à l'avant du véhicule dans la même file et éventuellement les files adjacentes.

La difficulté vient du fait de la reconnaissance d'une telle situation de bouchons. On peut envisager le fait que seul le conducteur décide de la mise en fonctionnement du régulateur de distance lorsque la situation lui apparaît propice. Toutefois, une telle situation peut s'avérer dangereuse, le conducteur pouvant mettre en fonctionnement le régulateur dans une situation inadaptée, la régulation de vitesse et de distance qui s'ensuit pouvant s'avérer alors inconfortable, voire dangereuse pour le conducteur.

Avec des moyens de détection relativement simples, la possibilité qu'un véhicule soit détecté de façon inappropriée augmente, et, par conséquent, la possibilité que la régulateur pilote le véhicule de façon inappropriée augmente également, ce qui peut s'avérer dangereux, d'autant plus que dans les bouchons les distances séparant les véhicules sont faibles.

La présente invention vise à obtenir un système de régulation de la distance d'un véhicule adapté à des situations de bouchons ayant lieu dans des contextes routiers du type autoroutes ou voies rapides.

Dans ce but, elle propose que la régulation de la distance ne puisse être activée par le conducteur que dans le cas où les trois conditions suivantes sont remplies :
- mise en fonctionnement volontaire de la régulation par le conducteur du premier véhicule,
- détection d'un second véhicule, et
- vitesse du premier véhicule inférieure à une valeur de vitesse déterminée.

L'invention prévoit également que l'activation de la régulation de distance soit assujettie au déplacement du premier véhicule sur un axe routier de type déterminé, du type autoroute ou voie rapide.

La détermination du type d'axe routier peut notamment être obtenu en comparant la portion du premier véhicule avec une base de données d'axes routiers

L' invention propose également un dispositif de régulation de la distance d'un premier véhicule automobile, équipé d'un système de freinage et d'un organe de contrôle du groupe motopropulseur, par rapport à un second véhicule, ledit dispositif équipant le premier véhicule et comprenant un calculateur, adapté pour transmettre des consignes au système de freinage et à l'organe de contrôle du groupe motopropulseur, et pouvant notamment piloter l'arrêt et le démarrage du premier véhicule.

Ce dispositif est caractérisé en ce que le calculateur est relié à des moyens de détermination du contexte routier, et en ce que le calculateur ne transmet des consignes que si le contexte routier est d'un type déterminé.

D'autres caractéristiques et avantages de l'invention apparaîtront à la lecture de la description qui va suivre en référence aux dessins annexés sur lesquels :
La figure 1 représente les éléments constitutifs du régulateur selon l'invention.
La figure 2, sous forme de schéma-blocs, le procédé de mise en fonctionnement du régulateur selon l'invention.

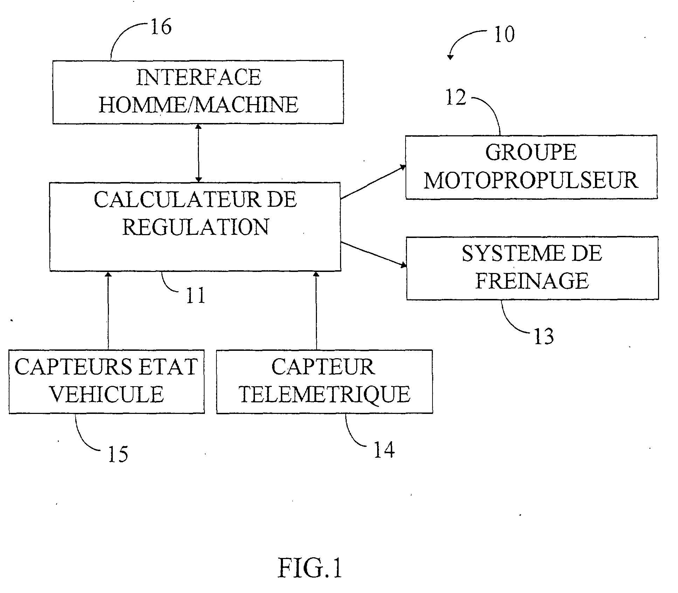

Le régulateur 10, représenté sur la figure 1, équipant un véhicule, appelé véhicule suiveur, se compose, classiquement d'au moins un capteur télémétrique 14, relié à un calculateur de régulation 11, lui-même connecté à des capteurs d'état du véhicule 15, à un organe de contrôle du groupe motopropulseur 12, à un système de commande de freinage 13 et à une interface homme machine 16.

Le capteur télémétrique 14 peut être du type LIDAR (Light Detection And Ranging) et transmettre un signal à partir duquel le calculateur de régulation 11 est capable de détecter la présence d'un véhicule, ou d'un obstacle, sur la scène routière située en avant du véhicule suiveur. Plus précisément, le calculateur de régulation 11 est adapté pour déterminer si le véhicule ou l'obstacle détecté est une cible dite d'intérêt, par exemple un véhicule situé sur la même voie que le véhicule suiveur équipé du régulateur 10.

Les capteurs d'état du véhicule 15 incluent un capteur de vitesse véhicule, un capteur de position de la pédale de frein, un capteur de position de la pédale d'accélérateur (ces deux derniers capteurs pouvant être du type tout ou rien) et, éventuellement, un capteur de régime du moteur du véhicule, ainsi qu'un capteur de l'angle du volant du véhicule.

L'organe de contrôle du groupe motopropulseur 12 peut consister, par exemple, en un organe de contrôle de l'ouverture du papillon d'admission des gaz dans le cas d'un moteur essence, ou un organe de contrôle de l'injection de carburant, en particulier dans le cas d'un moteur Diesel.

L'interface homme/machine 16 peut comporter, par exemple, un afficheur d'informations situé sur le tableau de bord, ou bien un système d'affichage tête haute (Head Up Display) placé sur le pare-brise.

Le calculateur de régulation 11 est également relié à des moyens de détermination du contexte routier 17. Ces moyens incluent des moyens de détection de la position du véhicule suiveur (par exemple, exprimée par la longitude et la latitude du véhicule). Typiquement, il peut s'agir d'une antenne GPS (Global Positionning System), d'un type connu, adaptée pour recevoir des signaux émis par des satellites ou éventuellement de balises au sol. Les moyens de détermination du contexte routier 17 comprennent également un calculateur disposant dans une zone de mémoire d'une base de données cartographiques contenant les noeuds et liens du réseau routier, ainsi que des informations relatives à chaque branche du réseau routier, telles que le type de voie, la vitesse limite sur ce type de voie, etc. Le calculateur est adapté, selon n'importe quel type d'algorithme connu, pour déterminer l'axe routier emprunté, par exemple, à partir des moyens de détection de position et des informations contenues dans la base de données cartographiques, ainsi que des signaux issus des capteurs d'état du véhicule 15, tels que le capteurs de vitesses, et donc de connaître les caractéristiques associés à cet axe routier dans la base de données.

La base de données cartographiques peut éventuellement être disponible sur des supports, du type Cdroms, le calculateur des moyens de détermination du contexte routier 17 pouvant alors recevoir des données d'un lecteur de CDRoms.

Le fonctionnement classique du régulateur de distance 10 est le suivant. Le calculateur de régulation 11 reçoit du capteur télémètrique 14 une information sur la distance d'une éventuelle cible d'intérêt et la vitesse relative entre le véhicule suiveur et ladite cible d'intérêt, des capteurs d'état du véhicule 15, une information sur la vitesse du véhicule suiveur, et de l'interface homme/machine 16 des consignes du conducteur. Il retransmet au conducteur des informations, par exemple, sous forme de signaux d'alerte sonores ou visuels, et donne à l'organe de contrôle du groupe motopropulseur 12 une consigne pour piloter le régime du moteur, et au système de commande de freinage 13, une consigne de pression de freinage par exemple, selon des lois de commande de régulation de distance et/ou de vitesse.

Le calculateur de régulation 11 n'est susceptible de transmettre de consignes à l'organe de contrôle du groupe motopropulseur 12 et au système de commande de freinage 13, que si un certain nombre de conditions sont réunies. Ces conditions sont appelées conditions d'activation du régulateur 10.

La première condition est la mise en fonctionnement volontaire du régulateur 10 par le conducteur. Celle-ci peut être obtenue par la présence d'un bouton séparé sur l'interface homme/machine 16 que le conducteur doit volontairement enclencher.

Une fois cette première condition remplie, le calculateur de régulation 11 regarde les deux autres conditions : il détermine si la vitesse *V* du véhicule est inférieure à une valeur de seuil *V*_{*max*}, et d'autre part, détermine, à partir du signal émis par le capteur télémétrique 14, si une cible d'intérêt est présente. Typiquement, la valeur seuil *V*_{*max*} est e l'ordre de 50 à 60 km/h.

Dans le cas où ces trois conditions d'activation sont remplies, le régulateur 10 est dit activable, c'est-à-dire que des conditions de sécurité suffisantes sont considérées comme étant réunies pour que le régulateur 10 puisse être activé. L'activation du régulateur 10 est obtenue par l'appui par le conducteur sur un bouton, préférentiellement localisé différemment par rapport au bouton de mise en fonctionnement, et d'accès plus facile, par exemple, du type commande sous volant. Une fois le régulateur 10 activé, le calculateur de régulation 11 est susceptible de transmettre des consignes à l'organe de contrôle du groupe motopropulseur 12 et au système de commande de freinage 13 selon l'état du véhicule.

Les consignes transmises assurent une régulation de la distance entre le véhicule suiveur et la cible d'intérêt, et de la vitesse du véhicule suiveur, en fonction de la vitesse de la cible d'intérêt et de la distance séparant le véhicule suiveur et de la cible d'intérêt. Si la vitesse du véhicule suiveur devient inférieure à une valeur de seuil notée *V*_{*min*}, alors le calculateur de régulation 11 pilote le véhicule jusqu'à son arrêt. La valeur de seuil *V*_{*min*} peut être de l'ordre de 1 km/h. Le calculateur de régulation 11 est, en outre, adapté pour piloter le redémarrage du véhicule, ce redémarrage pouvant être complètement automatique ou dépendant d'une action complémentaire du conducteur (comme l'appui sur un bouton de l'interface home/machine 16).

Dans le cas où la vitesse de la cible d'intérêt augmente et dépasse la valeur de seuil *V*_{*max*}, le calculateur de régulation 11 effectue une simple régulation de la vitesse du véhicule suiveur avec une vitesse de consigne égale à la vitesse *V*_{*max*}*.*

Dans le cas où la cible d'intérêt disparaît soudainement, le calculateur de régulation 11 effectue une simple régulation de la vitesse du véhicule suiveur avec une vitesse de consigne égale à la vitesse du véhicule suiveur avant la perte de la cible d'intérêt. A la réapparition de la cible d'intérêt, le calculateur de régulation 11 reprend une régulation de la distance séparant le véhicule et la cible d'intérêt.

A tout moment où le régulateur est activé, une action du conducteur sur la pédale de frein interrompt la transmission des consignes par le calculateur de régulation 11 à l'organe de contrôle du groupe motopropulseur 12 et/ou au système de commande de freinage 13, permettant au conducteur de reprendre le contrôle de son véhicule. Au relâchement de la pédale de frein, le régulateur 10 redevient activable. Toutefois, lorsque le véhicule suiveur est à l'arrêt (c'est-à-dire présente une vitesse inférieure à *V*_{*min*}), et si la conducteur souhaite activer la régulation, une action sur la pédale de frein lance une temporisation. Si le conducteur relâche les feins après l'expiration de la temporisation, le régulateur 10 est activable. Toutefois, si le conducteur relâche les freins avant l'expiration de la temporisation, le régulateur 10 reprend automatiquement la régulation, en l'occurrence, pilote l'arrêt du véhicule.

A tout moment où le régulateur est activé, une action du conducteur sur la pédale d'accélérateur suspend la transmission des consignes par le calculateur de régulation 11 à l'organe de contrôle du groupe motopropulseur 12 et/ou au système de commande de freinage 13.

Au relâchement de la pédale d'accélérateur, le régulateur 10 reprend automatiquement la régulation.

Aux trois conditions rendant le régulateur 10 activable peut venir s'ajouter une quatrième qui est que l'angle du volant doit être inférieure à une valeur de seuil déterminée. En effet, dans le cas contraire, on peut considérer que le véhicule se trouve dans un virage de courbure importante et que le capteur télémétrique risque de donner des indications trompeuses, et, par conséquent, que d'éventuelles transmissions de consignes, tenant compte de ces indications, par le calculateur de régulation 11 à l'organe de contrôle du groupe motopropulseur 12 et/ou au système de commande de freinage 13, pourraient s'avérer dangereuses.

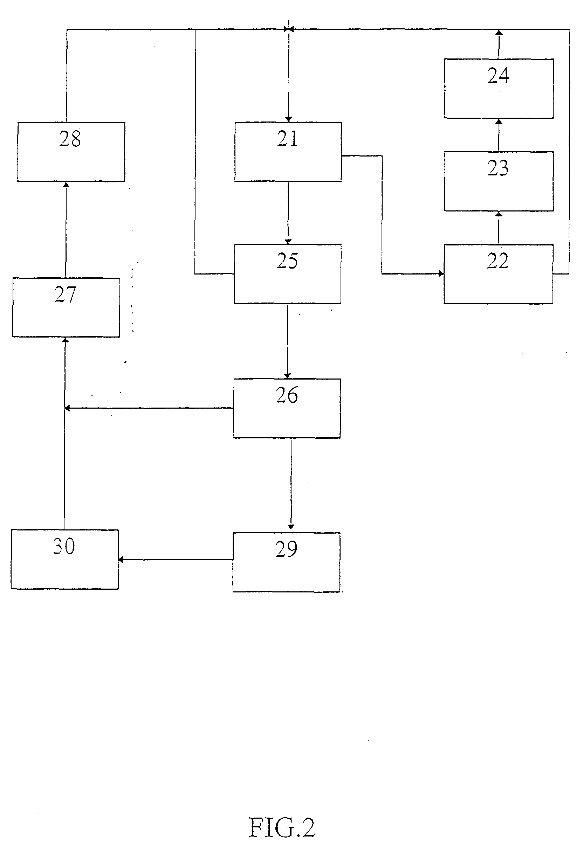

Les conditions sont appelées conditions d'activation du régulateur 10 peuvent également être mises en oeuvre selon la routine présentée sur la figure 2. Dans le cas où ces conditions d'activation sont remplies, le régulateur 10 (ou le calculateur de régulation 11) est dit activable, c'est-à-dire que des conditions de sécurité suffisantes sont considérées comme étant réunies pour que le régulateur 10 puisse être activé. Dans le cas où toutes les conditions d'activation ne sont pas remplies, le régulateur 10 (ou le calculateur de régulation 11) est dit inactivable.

Une fois activable, l'activation proprement dite du régulateur 10 est obtenue par l'appui par le conducteur sur un bouton, différent du bouton de mise en fonctionnement, et d'accès plus facile, typiquement, une commande sous volant. Une fois le régulateur 10 activé, le calculateur de régulation 11 est susceptible de transmettre des consignes à l'organe de consignes à l'organe de commande du groupe motopropulseur 12 et au système de commande de freinage 13 selon l'état du véhicule.

La routine représentée sur la figure 2 n'est exécutée que si le conducteur a appuyé sur le bouton de mise en fonctionnement du régulateur 10.

A l'étape 21, le calculateur de régulation 11 vérifie si le véhicule se trouve effectivement sur une zone routière sur laquelle une régulation de vitesse et/ou de distance est envisageable. Pratiquement, le calculateur de régulation 11 détermine le véhicule se trouve dans une zone autoroutière ou péri-urbaine, ces informations lui étant transmises par les moyens de détermination du contexte routier 17.

Si tel est le cas, le calculateur de régulation 11 vérifie à l'étape 22 s'il se trouve déjà dans un état activable. Si oui, aucune action particulière n'est accomplie, et la routine retourne à l'étape 21. Dans le cas contraire, le calculateur de régulation 11 se place dans en état activable à l'étape 23, et en informe le conducteur, à l'étape 24, au moyen de l'interface homme/machine 16.

Si le véhicule ne se trouve pas dans une zone routière convenable, le calculateur de régulation 11 détermine, à l'étape 25, si le régulateur 10 est activable. Si ce n'est pas le cas, la routine retourne à l'étape 21, le régulateur étant inactivable. Si le régulateur 10 est activable, le calculateur de régulation 11 vérifie, à l'étape 26, si le régulateur 10 est activé, ce qui inclue les cas pour lesquels le régulateur 10 peut être en train de transmettre des consignes à l'organe de commande du groupe motopropulseur 12 ou au système de freinage 13.

Si le régulateur 10 n'est pas activé, le calculateur de régulation 11 informe le conducteur, à l'étape 27, au moyen de l'interface homme/machine 16, que le régulateur 10 ne va plus être activable. A l'étape 28, le calculateur de régulation 11 place le régulateur 10 à l'état inactivable. Si, à l'étape 26, le régulateur 10 s'avère être activé, le calculateur de régulation 11 informe le conducteur, à l'étape 29, au moyen de l'interface homme/machine 16, que le régulateur 10 ne va plus être activé. A l'étape 30, le calculateur de régulation 11 place le régulateur à l'état activable (interrompant l'éventuelle régulation en cours), puis informe le conducteur, à l'étape 27, au moyen de l'interface homme/machine 16, que le régulateur 10 ne va plus être activable, et finalement, à l'étape 30, place le régulateur 10 à l'état inactivable.

Les moyens de détermination du contexte routier peuvent être de tout type connu. Ils peuvent par exemple inclure des caméras associées à des moyens de traitement d'images adaptés pour reconnaître automatiquement le type de route.

La présente invention présente de nombreux avantages. La présence de conditions d'activation permet de rendre plus sûre l'utilisation du régulateur. En effet, le fait que le régulateur ne soit activable qu'aux basses vitesses implique que le véhicule équipé du régulateur peut s'approcher relativement près d'éventuelles cibles d'intérêt, augmentant ainsi les performances des capteurs télémétriques. En outre, le fait que le régulateur ne soit activable que si la présence d'une cible d'intérêt a été détectée permet de s'assurer que les consignes émises par le calculateur de régulation de distance auront pour origine cette cible d'intérêt. Ceci permet de s'affranchir de problèmes de non détection possibles dus à la complexité de la scène routière ou à un dysfonctionnement de la fonction de détection de l'environnement.

La présente invention est particulièrement dédiée aux situations de bouchons pour lesquels la scène routière est relativement simple et permet l'utilisation de capteurs télémétriques de complexité similaire à ceux utilisés pour les régulateurs de distance et de vitesse sur les autoroutes et voies rapides.

Finalement, autoriser une reprise automatique de la régulation, lorsque le véhicule est à l'arrêt et que le conducteur exerce une action sur la pédale de frein d'un durée inférieure à une temporisation, sans que le conducteur ait de nouveau à activer le régulateur, peut s'avérer très utile, en particulier dans le cas où le véhicule est équipé d'une boîte de vitesse automatique, puisqu'alors, à l'arrêt si le conducteur de freine pas ou ne change pas le mode de la boîte de vitesse automatique, le véhicule continue d'avancer.

Enfin, le principal avantage du régulateur selon l'invention est de limiter la fonction de régulation aux contextes routiers où elle pourra fournir au conducteur une prestation fiable, compréhensible et prévisible pour le conducteur.

## Revendications

1. Procédé de régulation de la distance d'un premier véhicule automobile, équipé d'un système de freinage (13) et d'un organe de contrôle du groupe motopropulseur (12), par rapport à un second véhicule, par un calculateur (11) équipant ledit premier véhicule, et consistant en la transmission de consignes, par ledit calculateur (11), au système de freinage (13) et à l'organe de contrôle du groupe moto-propulseur (12), ledit calculateur (11) pouvant notamment piloter l'arrêt et le démarrage du premier véhicule, lorsque ladite régulation de distance est activée par le conducteur du premier véhicule, **caractérisé en ce que** la régulation de distance ne peut être activée par le conducteur que dans le cas où les trois conditions d'activation est remplies.
- mise en fonctionnement volontaire de la régulation par le conducteur du premier véhicule.
- détection du second véhicule.
- vitesse du premier véhicule inférieure à une valeur de vitesse déterminée.

2. Procédé de régulation selon la revendications 1, **caractérisé en ce que** la régulation de distance est activée si le premier véhicule circule sur un axe routier déterminé du type autoroute ou voie rapide.

3. Procédé de régulation selon la revendication 2, **caractérisé en ce que** l'axe routier est déterminé à partir de la position du premier véhicule et de la comparaison de cette position avec une base de données d'axes routiers.

4. Procédé de régulation selon la revendication 1, 2 ou 3, **caractérisé en ce que** la condition d'activation est que l'angle volant est inférieure à une valeur déterminée.

5. Procédé de régulation de distance selon l'une des revendication 1 à 4 **caractérisé en ce que** lorsque le calculateur (11) transmet des consignes au système de freinage (13) et à l'organe de contrôle du groupe motopropulseur (12), et que le second véhicule n'est plus détecté, le calculateur (11) effectue une régulation de vitesse du premier véhicule avec comme consigne de vitesse, la valeur de seuil déterminée.

6. Dispositif de régulation de la distance d'un premier véhicule automobile, équipé d'un système de freinage (13) et d'un organe de contrôle du groupe motopropulseur (12), par rapport à un second véhicule, ledit dispositif équipant le premier véhicule et comprenant un calculateur (11), adapté pour transmettre des consignes au système de freinage (13) et à l'organe de contrôle du groupe motopropulseur (12), et pouvant notamment piloter l'arrêt et le démarrage du premier véhicule, **caractérisé en ce que** le calculateur (11) est relié à des moyens de détermination du contexte routier (17), et **en ce que** le calculateur (11) ne transmet des consignes que si le contexte routier est d'un type déterminé.

7. Dispositif de régulation selon la revendication 6, **caractérisé en ce que** les moyens de détermination du contexte routier (17) comprennent des moyens de détection de la position du premier véhicule, une base de données cartographiques du réseau routier comportant des informations sur le type de chaque axe routier, et des moyens de détermination de l'axe routier emprunté par le premier véhicule, à partir de la position du premier véhicule et des informations de la base de données.

8. Dispositif de régulation selon la revendication 7, **caractérisé en ce que** les moyens de détection de la position du premier véhicule comprennent une antenne recevant des signaux émis par des satellites et/ou de balises au sol.
